# EUROPEAN PATENT APPLICATION

(11) **EP 3 944 097 A1**
(43) Date of publication of application: **26.01.2022**
(21) Application number: 21168483.2
(22) Date of filing: 15.04.2021
(51) Int. Cl.: G06F 16/332, G06F 16/435, G06Q 10/10

(54) **METHOD AND APPARATUS FOR INFORMATION PROCESSING IN USER CONVERSATION, ELECTRONIC DEVICE AND STORAGE MEDIUM**

(30) Priority: 20.07.2020 CN 202010699246
(71) Applicant: Beijing Baidu Netcom Science and Technology Co., Ltd., Beijing 100085 (CN)
(72) Inventor: GUO, Zhen, Beijing 100085 (CN); WU, Wenquan, Beijing 100085 (CN); LIU, Zhanyi, Beijing 100085 (CN)
(74) Representative: dompatent von Kreisler Selting Werner - Partnerschaft von Patent- und Rechtsanwälten mbB

(57) **Abstract**

The present disclosure discloses a method and apparatus for information processing in a user conversation, an electronic device and a storage medium, and relates to the field of artificial intelligence and the natural language processing field. The method may include: acquiring conversation preceding information in a conversation between a first user and a second user; acquiring a target conversation strategy employed by the first user; generating initial reply content with a pre-trained response generating model according to the target conversation strategy and the conversation preceding information; and sending the initial reply content to a client of the first user, so as to display the initial reply content on a conversation interface of the first user with the second user. With the technical solution of the present disclosure, the reply content in the user conversation may be generated intelligently instead of completely depending on the user, thereby improving the flexibility of an information processing operation in a user conversation scenario and enhancing the intelligence of the user conversation scenario.

## Description

### TECHNICAL FIELD

The present disclosure relates to the computer technology field, and particularly to the fields of artificial intelligence and the natural language processing, and more particularly to a method and apparatus for information processing in a user conversation, an electronic device and a storage medium thereof.

### BACKGROUND

In a user-to-user conversation scenario realized based on a conversation between users, how to realize a better chat is a constant topic pursued by the users. Friend contacts, work communication and life companion pursuit all need an accurate listen of voices of the other party and provision of appropriate feedback in appropriate time and scenarios.

However, in the existing user-to-user conversation scenario, since both conversation parties are users without participating of smart devices, all conversation processes depend on the users completely, and the conversation system is not intelligent.

### SUMMARY

In order to solve the above-mentioned technical problem, the present disclosure provides a method and apparatus for information processing in a user conversation, an electronic device and a storage medium thereof.

According to an aspect of the present disclosure, there is provided a method for information processing in a user conversation, including:
acquiring conversation preceding information in a conversation between a first user and a second user;
acquiring a target conversation strategy employed by the first user;
generating initial reply content with a pre-trained response generating model according to the target conversation strategy and the conversation preceding information; and
sending the initial reply content to a client of the first user, so as to display the initial reply content on a conversation interface of the first user with the second user.

According to another aspect of the present disclosure, there is provided an apparatus for information processing in a user conversation, including:
an information acquiring module configured for acquiring a conversation preceding information in a conversation between a first user and a second user;
a strategy acquiring module configured for acquiring a target conversation strategy employed by the first user;
a generating module configured for generating initial reply content with a pre-trained response generating model according to the target conversation strategy and the conversation preceding information; and
a sending module configured for sending the initial reply content to a client of the first user, so as to display the initial reply content on a conversation interface of the first user with the second user.

According to still another aspect of the present disclosure, there is provided an electronic device, including:
at least one processor; and
a memory connected with the at least one processor communicatively;
the memory stores instructions executable by the at least one processor to enable the at least one processor to carry out the method as mentioned above.

According to yet another aspect of the present disclosure, there is provided a non-transitory computer readable storage medium including instructions which, when executed by a computer, cause the computer to carry out the method as mentioned above.

According to yet another aspect of the present disclosure, there is provided a computer program product including instructions which, when the program is executed by a computer, cause the computer to carry out the method as mentioned above.

With the technical solution of the present disclosure, the reply content in the user conversation may be generated intelligently instead of completely depending on the user, thereby improving the flexibility of an information processing operation in a user conversation scenario and enhancing the intelligence of the user conversation scenario.

It should be understood that the statements in this section are not intended to identify key or critical features of the embodiments of the present disclosure, nor limit the scope of the present disclosure. Other features of the present disclosure will become apparent from the following description.

### BRIEF DESCRIPTION OF THE DRAWINGS

The drawings are used for better understanding the present solution and do not constitute a limitation of the present disclosure. In the drawings:
Fig. 1 is a schematic diagram according to a first embodiment of the present disclosure;
Fig. 2 is a schematic diagram according to a second embodiment of the present disclosure;
Fig. 3 is a schematic diagram according to a third embodiment of the present disclosure;
Fig. 4 is a schematic diagram according to a fourth embodiment of the present disclosure; and
Fig. 5 is a block diagram of an electronic device configured to implement the above-mentioned method according to an embodiment of the present disclosure.

### DETAILED DESCRIPTION OF THE EMBODIMENTS

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

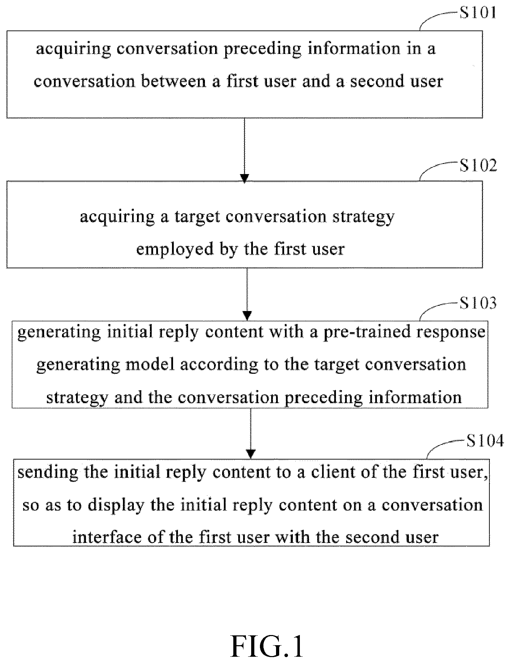

Fig. 1 is a schematic diagram according to a first embodiment of the present disclosure; as shown in Fig. 1, this embodiment provides a method for information processing in a user conversation, including:
S101: acquiring conversation preceding information in a conversation between a first user and a second user;
S102: acquiring a target conversation strategy employed by the first user;
S103: generating initial reply content with a pre-trained response generating model according to the target conversation strategy and the conversation preceding information; and
S104: sending the initial reply content to a client of the first user, so as to display the initial reply content on a conversation interface of the first user with the second user.

A subject for executing the method for information processing in a user conversation according to this embodiment may be an apparatus for information processing in a user conversation, and the apparatus may be provided in a user conversation system implemented based on the conversation between the users to process the information in the user conversation, so as to improve the intelligence of the user conversation system.

The user conversation system according to this embodiment may be configured as various instant messaging application systems and is different from an existing man-machine conversation system. For example, a man-machine conversation is a technology which is relatively mature in the field of artificial intelligence (AI), and may implement conversation understanding, planning, and generating technologies, or the like. Currently, intelligent service equipment may be provided in intelligent customer service and various special scenarios, so as to provide service by means of the man-machine conversation. That is, usually, the man-machine conversation system is configured based on a fixed scenario, and is only able to be applied to a certain fixed scenario. The user conversation system takes the users as the two conversation parties and is not restricted by any scenario, and thus is suitable for an open system. Therefore, some technologies in the man-machine conversation system for a certain scenario may not be applicable when directly applied to the user conversation system.

In addition, in consideration of demands for the user conversation system, due to various influences, such as personal abilities, the user may be unable to generate reply content making the other party comfortable when replying to the conversation of the other party. In view of this case, in this embodiment, with reference to the intelligence of the man-machine conversation, a function of intelligently generating the reply content is set in the user conversation system for direct reference and use by the user, thereby enriching the flexibility of generation of the reply content in the user conversation and improving the intelligence in the user conversation.

For example, conversation preceding information in the conversation between the first and second users is to be acquired first. For example, the first and second users are the two parties of the conversation, and the initial reply content is generated at the first user side. The first and second users herein may refer to accounts used by the users as both parties of the conversation. In an example, the conversation preceding information in the current conversation of the first and second users may be acquired in a server of the user conversation system. The conversation preceding information in an example may include a latest message of the second user, or at least one latest message of each of the first and second users, so as to facilitate understanding of the above scenario.

In this embodiment, the acquired target conversation strategy employed by the first user is a conversation strategy which is used to generate the initial reply content in the conversation of the first user side. Alternative conversation strategies in this embodiment may be positive, negative, polite-rejection and topic-change conversation strategies as well as a conversation strategy including at least one trick. For example, each conversation strategy has its own response properties. For example, the trick conversation strategy may be a strategy of intentionally setting a trap for the other party with a certain strategy, so as to make the other party fall into the trap, or the like. For example, the ways of setting the trap may be different for different tricks. Moreover, the trick conversation strategy in some examples usually needs a subsequent multi-sentence conversation for support.

Next, the acquired target strategy employed by the first user and the conversation preceding information in the conversation between the first and second users may be input into the pre-trained response generating model which generates the corresponding initial reply content. The response generating model may be pre-trained based on a neural network. In the training process, the response generating model may learn, based on a large amount of training data, how to generate corresponding reply content according to various strategies and corresponding conversation preceding information. Thus, when used in this step, the response generating model may generate initial reply content based on the input target strategy and conversation preceding information. The initial reply content refers to both the conversation preceding information and the target strategy, thereby effectively guaranteeing the accuracy of the generated initial reply content.

Finally, the initial reply content is sent to the client of the first user to be displayed on the conversation interface of the first user with the second user, such that the first user may refer to the initial reply content; if agreeing to adopt the initial reply content in a chat, the first user may copy the initial reply content into a chat conversation box and click sending, such that the second user may see the initial reply content in a conversation interface with the first user. If further wanting to adjust the initial reply content, the first user may edit the initial reply content after copying the initial reply content into the chat conversation box, and then click sending.

For example, a strategy selecting module may be displayed/shown/presented on the interface of the client of the user conversation system, or a plurality of strategies for the user to choose may be displayed on the interface directly. When using the system, the user may select one strategy as the target strategy, and click a reply-content generating button; at this point, the apparatus for information processing on the server side of the user conversation system may acquire the conversation preceding information in the conversation between the first and second users, acquire the target conversation strategy selected by the first user, generate the corresponding initial reply content with the pre-trained response generating model according to the target conversation strategy and the conversation preceding information, and send the initial reply content to the client of the first user, so as to display the initial reply content on the conversation interface of the first user with the second user.

The method for information processing in a user conversation according to this embodiment includes: acquiring the conversation preceding information in the conversation between the first and second users; acquiring the target conversation strategy employed by the first user; generating the initial reply content with the pre-trained response generating model according to the target conversation strategy and the conversation preceding information; and sending the initial reply content to the client of the first user, so as to display the initial reply content on the conversation interface of the first user with the second user. With the solution of this embodiment, the reply content in the user conversation may be generated intelligently instead of completely depending on the user, thereby improving the flexibility of an information processing operation in a user conversation scenario and enhancing the intelligence of the user conversation scenario.

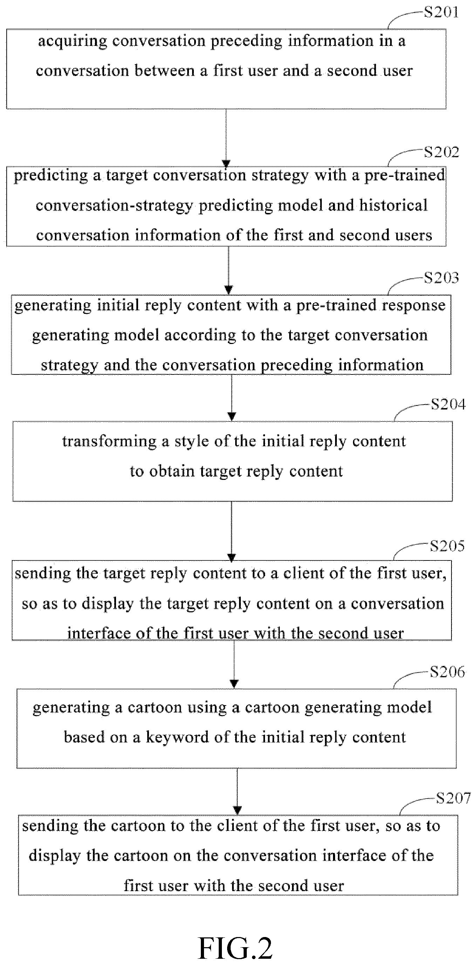

Fig. 2 is a schematic diagram according to a second embodiment of the present disclosure; as shown in Fig. 2, the technical solution of the method for information processing in a user conversation according to this embodiment of the present disclosure is further described in more detail based on the technical solution of the above-mentioned embodiment shown in Fig. 1. As shown in Fig. 2, the method for information processing in a user conversation according to this embodiment may include the following steps:
S201: acquiring conversation preceding information in a conversation between a first user and a second user.
S202: predicting a target conversation strategy with a pre-trained conversation-strategy predicting model and historical conversation information of the first and second users.

The step 202 is an example of the step S102 in the above-mentioned embodiment with reference to Fig. 1. For example, the conversation-strategy predicting model may be pre-trained based on a neural network model. The historical conversation information of the first and second users may include at least one pair of latest conversation message in a current conversation scenario, and the pair of conversation message includes one sentence of the first user and one sentence of the second user. The conversation-strategy predicting model may understand conversation content of the first and second users based on the historical conversation information thereof, and then predict an effective target conversation strategy based on the current historical conversation content.

The conversation strategy model in this embodiment may be continuously trained with a large amount of pairs of historical conversation information/messages and corresponding labeled target conversation strategies until the conversation strategy model is able to accurately predict the target conversation strategy.

In addition, optionally, in the step S102 in the above-mentioned embodiment shown in Fig. 1, the target conversation strategy selected by the first user from a preset conversation strategy set may be acquired. For example, a plurality of conversation strategies in the conversation strategy set are set in the conversation interface, and the first user may click to select one of the conversation strategies from the conversation interface as the target conversation strategy. When detecting the selection of the first user, a server of a user conversation system may acquire the target conversation strategy selected by the first user from the preset conversation strategy set.

S203: generating initial reply content with a pre-trained response generating model according to the target conversation strategy and the conversation preceding information.

S204: transforming a style of the initial reply content to obtain target reply content.

At this point, the user may copy the target reply content into a conversation box and click sending, such that the second user will see the target reply content of the user.

In this embodiment, the style may be transformed using a preset module or a preset style transforming model. For example, the style in this embodiment may include a native honey word style, a humorous style, a dialect version style, or the like. Specifically, language features of corresponding styles may be set in corresponding style transforming templates, such that the initial reply content may be converted into the target reply content with the language features of the corresponding styles.

Alternatively, in this embodiment, a style transforming model corresponding to each style may be pre-trained based on a neural network model. The style transforming model corresponding to each style may be trained with a large amount of pairs of general description language material and corresponding language material of this style, so as to learn language descriptions of this style, such that when the style transforming model is used, the initial reply content may be converted into the target reply content of this style after received.

In addition, optionally, the target reply content in the above-mentioned step S204 is in the form of text. In practical applications, the target reply content may also be in the form of a picture or an animation. For example, optionally, the method according to this embodiment may further include the following steps:
(a1) based on the initial reply content, generating a picture with information of a keyword of the initial reply content as the target reply content; or
(b1) based on the initial reply content, generating an animation with the information of the keyword of the initial reply content as the target reply content.

Optionally, in this embodiment, the picture may also be generated using a picture generating template or a picture generating model.

First, a keyword may be extracted from the initial reply content by a keyword extracting model, and then, the picture may be generated based on the extracted keyword. If the picture is generated using the picture generating template, one picture generating template may be selected, and then, the keyword is embedded into the picture generating template, and picture information in the picture generating template is adjusted to be consistent with the meaning of the keyword.

If the picture is generated using the picture generating model, the keyword is input into the picture generating model, and the picture generating model may generate an appropriate picture based on the keyword and output the picture. The picture generating model is pre-trained based on a neural network model. In the training process, a large amount of pairs of keywords and corresponding pictures may be employed, such that the picture generating model learns the corresponding relationships between the keywords and the pictures for describing the keywords more accurately. Thus, when the keyword is input to the picture generating model in use, the picture generating model may predict the picture for accurately representing the keyword based on learned information.

It should be noted that the picture generated in this embodiment may include characters/word of the keyword itself or information with the same meaning as the keyword.

The step (b1) has a similar implementation to the step (a1), and the keyword in the initial reply content may also be first extracted using the keyword extracting model. Then, the animation with the information of the keyword of the initial reply content may be generated as the target reply content based on a preset animation generating template or animation generating model. The implementation process is similar to the implementation process of the step (a1), and the difference is only that the animation achieves a dynamic effect by a plurality of continuous pictures. The animation generating template may refer to the relevant description of the above-mentioned picture generating template, the animation generating model may refer to the relevant description of the above-mentioned picture generating model, and details are not repeated herein.

This step (a1) or (b1) in this embodiment may replace the step S204, and different forms of target reply content may be employed to enrich chat content of the user conversation and enhance the intelligence thereof.

S205: sending the target reply content to a client of the first user, so as to display the target reply content on a conversation interface of the first user with the second user.

S206: generating a cartoon using a cartoon generating model based on the keyword of the initial reply content.

S207: sending the cartoon to the client of the first user, so as to display the cartoon on the conversation interface of the first user with the second user.

The steps S206 to S207 may also optionally exist simultaneously with the above-mentioned steps S204 to S205. It should be noted that the target reply content finally generated in the above-mentioned steps S204 to S205 is displayed in the conversation box of the conversation interface of the first user with the second user. The steps S206 to S207 are used for enriching the conversation interface, such that the conversation interface has a brilliant display, enhancing the user experience.

For example, if the keyword of the initial reply content includes word "run", the cartoon generating model may generate a cartoon in which a cartoon figure is running. If the keyword of the initial reply content includes word "love", the cartoon generating model may generate a cartoon in which a cartoon figure expresses love. If the keyword of the initial reply content includes words "miss you", the cartoon generating model may generate a cartoon in which a cartoon figure expresses missing you, and so on.

The cartoon generating model in this embodiment is also pre-trained based on a neural network. The cartoon generating model may be trained using a large amount of groups of keywords and corresponding cartoons, so as to learn the corresponding relationships between the keywords and the cartoons for representing the keywords.

In addition, optionally, the method according to this embodiment may further include the following steps:
(a2) analyzing emotion information of the second user with an emotion analyzing model based on the historical conversation information of the first and second users, sending the emotion information of the second user to the client of the first user, and displaying the emotion information on the conversation interface of the first user with the second user.

For example, in the conversation between the first and second users, if also busy with other things, the first user may not carefully analyze the emotion of the second user from the conversation content of the second user. At this point, the emotion analyzing model in this embodiment may analyze the emotion information of the second user in real time according to the historical conversation information of the first and second users, and for example, the emotion information may include positive or negative information. The positive information indicates that the second user quite enjoys chatting with the first user. The negative information indicates that the second user may be busy with other things and does not want to chat at present. At this point, the first user may see the emotion information of the second user from the conversation interface, and rapidly end the conversation when seeing the negative information. If the second user is positive, the conversation may continue.

It should be noted that the emotion analyzing model may analyze each historical conversation section of the first and second users in real time to achieve emotion analysis of all historical conversation messages. Each historical conversation section may include at least one pair of conversation message including one sentence of each of the first and second users. For example, the emotion analyzing model displays the analyzed emotion information of the second user in the conversation interface, for example, on the side of the corresponding historical conversation, and the user may click to view the emotion information. Alternatively, in order to enrich a display effect, different colors may be employed to more intuitively display the emotion information of the second user.

(b2) analyzing whether the second user is interested in the current topic with a topic-interest-degree analyzing model based on the historical conversation information of the first and second users, sending the analysis result to the client of the first user, and displaying the analysis result on the conversation interface of the first user with the second user.

Similarly, in the conversation between the first and second users, the first user needs to carefully analyze each piece of reply content of the second user when intending to analyze whether the second user is interested in the current topic. If the user does not intend to perform careful analysis, whether the second user is interested in the current topic may be analyzed by means of the topic-interest-degree analyzing model in this embodiment.

Optionally, in this embodiment, during the real-time chat between the first and second users, the server of the user conversation system may divide the historical conversation information based on the topic involved in the chat content. The historical conversation information in this embodiment has one topic. The topic-interest-degree analyzing model in this embodiment may analyze whether the second user is interested in the current topic based on the conversation information of the first and second users in the historical conversation information, send the analysis result to the client of the first user, and display the analysis result on the conversation interface of the first user with the second user. Thus, the first user may decide whether to continue to talk about the current topic with the second user according to the analysis result, and change the topic timely if founding that the second user is not interested in the current topic, thereby enhancing the intelligence of the user conversation.

Similarly, during the chat between the first and second users, whether the second user is interested in the current topic may be analyzed in real time with the topic-interest-degree analyzing model, and the analysis result may be displayed on the conversation interface on the first user side with the second user in real time.

Still optionally, the method according to this embodiment may further include the following step: (c2) predicting an interested target topic of the second user with a topic predicting model based on the historical conversation information of the first and second users, sending the interested target topic of the second user to the client of the first user, and displaying the target topic on the conversation interface of the first user with the second user.

In this embodiment, the topic predicting model may also be used to predict topics in which the second user may be interested, and the topics are timely displayed on the conversation interface on the first user side with the second user. Thus, the first user may be reminded to change the topic to the interested topic of the second user to have a conversation with the second user, further enhancing the intelligence of the user conversation.

It should be noted that the above steps (a2) to (c2) have no sequential relationship with the steps S201-S206 in the embodiment shown in Fig. 2. The steps (a2) to (c2) may be implemented independently or combined with each other, real-time analysis or prediction may be performed based on the historical conversation information of the first and second users, and the analysis or prediction result may be sent to the client of the first user in real time, so as to be displayed on the conversation interface of the first user with the second user. Thus, the first user may acquire the information in real time and chat with the second user by referring to the analysis or prediction result, further enhancing the intelligence of the user conversation.

For example, all the above-mentioned models in this embodiment are configured as neural network models, and are trained through only one training stage, or through a pre-training stage and a fine-tuning stage.

In the method for information processing in a user conversation according to this embodiment, with the above-mentioned technical solution, intelligent analysis and prediction may be realized with some models in the user conversation scenario, such that the user in the user conversation may perform a more effective conversation based on the analysis and prediction results, thus effectively enriching the user conversation scenario, enhancing the flexibility of processing in the user conversation, and improving the intelligence in the user conversation and the efficiency of the user conversation.

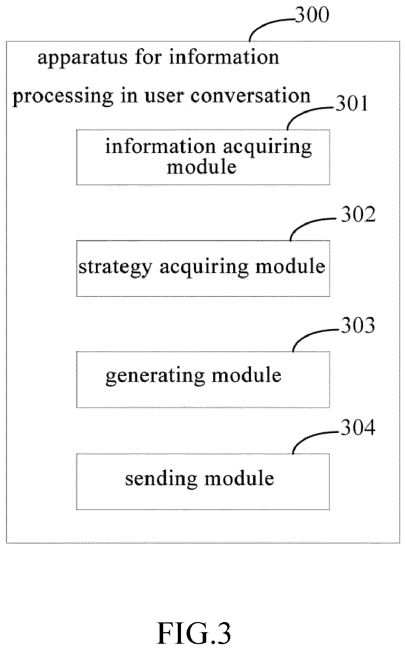

Fig. 3 is a schematic diagram according to a third embodiment of the present disclosure; this embodiment provides an apparatus 300 for information processing in a user conversation, including:
an information acquiring module 301 configured for acquiring a conversation preceding information in a conversation between a first user and a second user;
a strategy acquiring module 302 configured for acquiring a target conversation strategy employed by the first user;
a generating module 303 configured for generating initial reply content with a pre-trained response generating model according to the target conversation strategy and the conversation preceding information; and
a sending module 304 configured for sending the initial reply content to a client of the first user, so as to display the initial reply content on a conversation interface of the first user with the second user.

The apparatus 300 for information processing in a user conversation according to this embodiment has the same implementation as the above-mentioned relevant method embodiment by adopting the above-mentioned modules to implement the implementation principle and the technical effects of information processing in a user conversation, detailed reference may be made to the above-mentioned description of the relevant method embodiment, and details are not repeated herein.

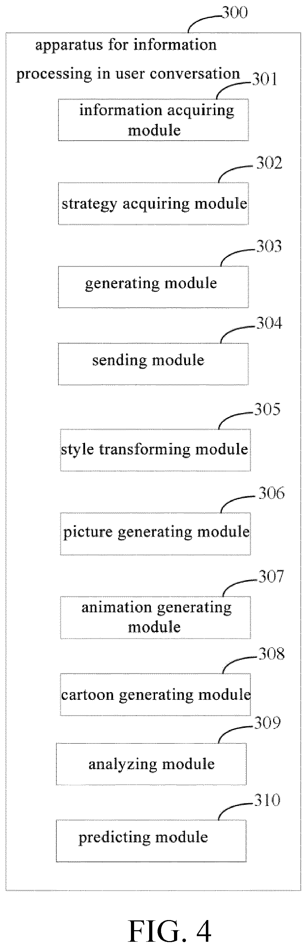

Fig. 4 is a schematic diagram according to a fourth embodiment of the present disclosure; as shown in Fig. 4, the technical solution of the apparatus 300 for information processing in a user conversation according to this embodiment of the present disclosure is further described in more detail based on the technical method of the above-mentioned embodiment shown in Fig. 3.

In the apparatus 300 for information processing in a user conversation according to this embodiment, the strategy acquiring module 302 is configured for:
acquiring the target conversation strategy selected by the first user from a preset conversation strategy set; or
predicting the target conversation strategy with a pre-trained conversation-strategy predicting model and historical conversation information of the first and second users.

Further optionally, the apparatus 300 for information processing in a user conversation according to this embodiment further includes:
a style transforming module 305 configured for transforming the style of the initial reply content to obtain target reply content; and
a picture generating module 306 configured for, based on the initial reply content, generating a picture with information of a keyword of the initial reply content as the target reply content; or
an animation generating module 307 configured for, based on the initial reply content, generating an animation with the information of the keyword of the initial reply content as the target reply content.

Further optionally, the apparatus 300 for information processing in a user conversation according to this embodiment further includes:
a cartoon generating module 308 configured for generating a cartoon using a cartoon generating model based on the keyword of the initial reply content;
the sending module 304 is further configured for sending the cartoon to the client of the first user, so as to display the cartoon on the conversation interface of the first user with the second user.

Further optionally, the apparatus 300 for information processing in a user conversation according to this embodiment further includes:
an analyzing module 309 configured for analyzing emotion information of the second user with an emotion analyzing model based on the historical conversation information of the first and second users; and/or analyzing whether the second user is interested in the current topic with a topic-interest-degree analyzing model based on the historical conversation information of the first and second users;
and the sending module 304 is further configured for sending the emotion information of the second user to the client of the first user, and displaying the emotion information on the conversation interface of the first user with the second user; and/or sending the analysis result indicating whether the second user is interested in the current topic to the client of the first user, and displaying the analysis result on the conversation interface of the first user with the second user.

Further optionally, the apparatus 300 for information processing in a user conversation according to this embodiment further includes:
a predicting module 310 configured for predicting an interested target topic of the second user with a topic predicting model based on the historical conversation information of the first and second users;
the sending module 304 is further configured for sending the interested target topic of the second user to the client of the first user, and displaying the target topic on the conversation interface of the first user with the second user.

The apparatus 300 for information processing in a user conversation according to this embodiment has the same implementation as the above-mentioned relevant method embodiment by adopting the above-mentioned modules to implement the implementation principle and the technical effects of information processing in a user conversation, detailed reference may be made to the above-mentioned description of the relevant method embodiment, and details are not repeated herein.

According to an embodiment of the present disclosure, there are also provided an electronic device, a readable storage medium and a computer program product.

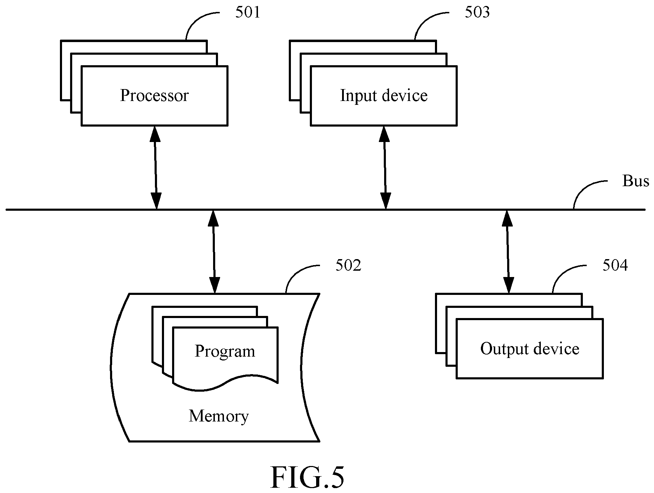

Fig. 5 is a block diagram of an electronic device configured to implement the above-mentioned method according to the embodiment of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile devices, such as personal digital processors, cellular telephones, smart phones, wearable devices, and other similar computing devices. The components shown herein, their connections and relationships, and their functions, are meant to be exemplary only, and are not meant to limit implementation of the present disclosure described and/or claimed herein.

As shown in Fig. 5, the electronic device includes one or more processors 501, a memory 502, and interfaces configured to connect the components, including highspeed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output device, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 5, one processor 501 is taken as an example.

The memory 502 is configured as the non-transitory computer readable storage medium according to the present disclosure. The memory stores instructions which are executable by the at least one processor to cause the at least one processor to perform a method for information processing in a user conversation according to the present disclosure. The non-transitory computer readable storage medium according to the present disclosure stores computer instructions for causing a computer to perform the method for information processing in a user conversation according to the present disclosure.

The memory 502 which is a non-transitory computer readable storage medium may be configured to store non-transitory software programs, non-transitory computer executable programs and modules, such as program instructions/modules corresponding to the method for information processing in a user conversation according to the embodiment of the present disclosure (for example, the relevant modules shown in Figs. 3 and 4). The processor 501 executes various functional applications and data processing of a server, that is, implements the method for information processing in a user conversation according to the above-mentioned embodiment, by running the non-transitory software programs, instructions, and modules stored in the memory 502.

The memory 502 may include a program storage area and a data storage area, and the program storage area may store an operating system and an application program required for at least one function; the data storage area may store data created according to use of the electronic device for implementing the method for information processing in a user conversation, or the like. Furthermore, the memory 502 may include a highspeed random access memory, or a non-transitory memory, such as at least one magnetic disk storage device, a flash memory device, or other non-transitory solid state storage devices. In some embodiments, optionally, the memory 502 may include memories remote from the processor 501, and such remote memories may be connected to the electronic device for implementing the method for information processing in a user conversation via a network. Examples of such a network include, but are not limited to, the Internet, intranets, local area networks, mobile communication networks, and combinations thereof.

The electronic device for implementing the method for information processing in a user conversation may further include an input device 503 and an output device 504. The processor 501, the memory 502, the input device 503 and the output device 504 may be connected by a bus or other means, and Fig. 5 takes the connection by a bus as an example.

The input device 503 may receive input numeric or character information and generate key signal input related to user settings and function control of the electronic device for implementing the method for information processing in a user conversation, such as a touch screen, a keypad, a mouse, a track pad, a touch pad, a pointing stick, one or more mouse buttons, a trackball, a joystick, or the like. The output device 504 may include a display device, an auxiliary lighting device (for example, an LED) and a tactile feedback device (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmitting data and instructions to, a storage system, at least one input device, and at least one output device.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display device (for example, a cathode ray tube (CRT) or liquid crystal display (LCD) monitor) for displaying information to a user; and a keyboard and a pointing device (for example, a mouse or a trackball) by which a user may provide input for the computer. Other kinds of devices may also be used to provide interaction with a user; for example, feedback provided for a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN), the Internet and a blockchain network.

A computer system may include a client and a server. Generally, the client and the server are remote from each other and interact through the communication network. The relationship between the client and the server is generated by virtue of computer programs which run on respective computers and have a client-server relationship to each other.

In the technical solution, the method according to this embodiment of the present disclosure includes: acquiring the conversation preceding information in the conversation between the first and second users; acquiring the target conversation strategy employed by the first user; generating the corresponding initial reply content with the pre-trained response generating model according to the target conversation strategy and the conversation preceding information; and sending the initial reply content to the client of the first user, so as to display the initial reply content on the conversation interface of the first user with the second user. With the solution of this embodiment, the reply content in the user conversation may be generated intelligently instead of completely depending on the user, thereby improving the flexibility of an information processing operation in the user conversation scenario and enhancing the intelligence of the user conversation scenario.

With the above-mentioned technical solution according to this embodiment of the present disclosure, intelligent analysis and prediction may be realized with some models in the user conversation scenario, such that the user in the user conversation may perform a more effective conversation based on the analysis and prediction results, thus effectively enriching the user conversation scenario, enhancing the flexibility of processing in the user conversation, and improving the intelligence in the user conversation and the efficiency of the user conversation.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A method for information processing in a user conversation, comprising:
acquiring (S101, S201) conversation preceding information in a conversation between a first user and a second user;
acquiring (S102) a target conversation strategy employed by the first user;
generating (S103, S203) initial reply content with a pre-trained response generating model according to the target conversation strategy and the conversation preceding information; and
sending (S104, S205) the initial reply content to a client of the first user, so as to display the initial reply content on a conversation interface of the first user with the second user.

2. The method of claim 1, wherein acquiring (S102) the target conversation strategy employed by the first user comprises:
acquiring the target conversation strategy selected by the first user from a preset conversation strategy set; or
predicting (S202) the target conversation strategy with a pre-trained conversation-strategy predicting model and historical conversation information of the first and second users.

3. The method of claim 1 or 2, further comprising:
transforming (S204) a style of the initial reply content to obtain target reply content; and
based on the initial reply content, generating a picture with information of a keyword of the initial reply content as the target reply content; or
based on the initial reply content, generating an animation with the information of the keyword of the initial reply content as the target reply content.

4. The method of any one of claims 1 to 3, further comprising:
generating (S206) a cartoon using a cartoon generating model based on a keyword of the initial reply content; and
sending (S207) the cartoon to the client of the first user, so as to display the cartoon on the conversation interface of the first user with the second user.

5. The method of any one of claims 1 to 4, further comprising:
analyzing emotion information of the second user with an emotion analyzing model based on historical conversation information of the first and second users, sending the emotion information of the second user to the client of the first user, and displaying the emotion information on the conversation interface of the first user with the second user; and/or
analyzing whether the second user is interested in the current topic with a topic-interest-degree analyzing model based on the historical conversation information of the first and second users, sending the analysis result to the client of the first user, and displaying the analysis result on the conversation interface of the first user with the second user.

6. The method of any one of claims 1 to 5, further comprising:
predicting an interested target topic of the second user with a topic predicting model based on historical conversation information of the first and second users, sending the interested target topic of the second user to the client of the first user, and displaying the interested target topic on the conversation interface of the first user with the second user.

7. An apparatus for information processing in a user conversation, comprising:
means for acquiring (S101, S201) a conversation preceding information in a conversation between a first user and a second user;
means for acquiring (S102) a target conversation strategy employed by the first user;
means for generating (S103, S203) initial reply content with a pre-trained response generating model according to the target conversation strategy and the conversation preceding information; and
means for sending (S104, S205) the initial reply content to a client of the first user, so as to display the initial reply content on a conversation interface of the first user with the second user.

8. The apparatus of claim 7, wherein the means for acquiring (S102) a target conversation strategy employed by the first user comprises:
means for acquiring the target conversation strategy selected by the first user from a preset conversation strategy set; or
means for predicting (S202) the target conversation strategy with a pre-trained conversation-strategy predicting model and historical conversation information of the first and second users.

9. The apparatus of claim 7 or 8, further comprising:
means for transforming (S204) the style of the initial reply content to obtain target reply content; and
means for, based on the initial reply content, generating a picture with information of a keyword of the initial reply content as the target reply content; or
means for, based on the initial reply content, generating an animation with the information of the keyword of the initial reply content as the target reply content.

10. The apparatus of any of claims 7 to 9, further comprising:
means for generating (S206) a cartoon using a cartoon generating model based on a keyword of the initial reply content; and
mean for sending (S207) the cartoon to the client of the first user, so as to display the cartoon on the conversation interface of the first user with the second user.

11. The apparatus of any one of claims 7 to 10, further comprising:
means for analyzing emotion information of the second user with an emotion analyzing model based on historical conversation information of the first and second users; and/or analyzing whether the second user is interested in the current topic with a topic-interest-degree analyzing model based on the historical conversation information of the first and second users; and
means for sending the emotion information of the second user to the client of the first user, and displaying the emotion information on the conversation interface of the first user with the second user; and/or sending the analysis result indicating whether the second user is interested in the current topic to the client of the first user, and displaying the analysis result on the conversation interface of the first user with the second user.

12. The apparatus of any one of claims 7 to 11, further comprising:
means for predicting an interested target topic of the second user with a topic predicting model based on the historical conversation information of the first and second users; and
means for sending the interested target topic of the second user to the client of the first user, and displaying the target topic on the conversation interface of the first user with the second user.

13. An electronic device, comprising:
at least one processor (501); and
a memory (502) connected with the at least one processor (501) communicatively;
wherein the memory (502) stores instructions executable by the at least one processor (501) to enable the at least one processor (501) to carry out the method of any one of claims 1 to 6.

14. A non-transitory computer readable storage medium comprising instructions which, when executed by a computer, cause the computer to carry out the method of any one of claims 1 to 6.

15. A computer program product comprising instructions which, when the program is executed by a computer, cause the computer to carry out the method of any one of claims 1 to 6.
